# EUROPEAN PATENT APPLICATION

(11) **EP 4 614 219 A1**
(43) Date of publication of application: **10.09.2025**
(21) Application number: 25160841.0
(22) Date of filing: 28.02.2025
(51) Int. Cl.: G02F 1/1343

(54) **ELECTRODE LAYER FOR SMART WINDOW, LIGHT CONTROL LAMINATE INCLUDING SAME, SMART WINDOW, AND AUTOMOBILE OR BUILDING WINDOW USING SAME**

(30) Priority: 05.03.2024 KR 20240031153
(71) Applicant: Dongwoo Fine-Chem Co., Ltd., Iksan-si, Jeollabuk-do 54631 (KR)
(72) Inventor: KIM, Gil-Woong, Iksan-si 54631 (KR); SONG, In-Kyu, Iksan-si 54631 (KR); OH, Pyoung-Yun, Iksan-si 54631 (KR)
(74) Representative: Betten & Resch

(57) **Abstract**

The present disclosure may provide an electrode layer for a smart window, which has excellent adhesion and thus it is not easily separated during the process such as cutting, and a light control laminate which can prevent defects or breakage during the process of manufacturing a smart window by including the electrode layer for a smart window, and thus improving adhesion between substrates, and which simplifies the manufacturing process and significantly reduces the thickness by not including a separate substrate for forming the electrode layer, and a smart window including the light control laminate, and an automobile or building window using the smart window.

## Description

### [Technical Field]

The present disclosure relates to an electrode layer for a smart window, a light control laminate including the same, a smart window, and an automobile or building window using the same.

### [Background Art]

In general, there are many cases where external light blocking coatings are applied to the windows of means of transportation such as vehicles, etc. However, the windows of conventional means of transportation have fixed transmittance, and the external light blocking coatings also have fixed transmittance.

Therefore, the windows of such conventional means of transportation have fixed overall transmittance, which may cause accidents. For example, if the overall transmittance is set low, there is no problem during the day when ambient light is sufficient. However, there is a problem in that drivers and others may have difficulty properly checking the surroundings of the means of transportation at night when there is not enough light around. Alternatively, if the overall transmittance is set high, there is a problem in that drivers and others may be dazzled during the day when ambient light is insufficient. Accordingly, a light control laminate that can change the transmittance of light when voltage is applied has been developed.

The light control laminate is driven by varying the transmittance by driving the liquid crystal according to the voltage application, and the light control laminates developed to date are manufactured by forming a conductive layer for driving the liquid crystal on a separate substrate and then combining this with other elements such as a polarizing plate.

For example, Japanese Patent Publication No. 2018-010035 also discloses a light control laminate including a transparent electrode layer formed on a polycarbonate (PC) substrate having a predetermined thickness.

However, when a separate substrate is included to form the electrode layer in this way, there are problems in that the manufacturing cost increases as the manufacturing process is becoming complicated, the thickness of the laminate increases. In addition, in the case of the conventional electrode layer for a smart window, there is a problem in that poor adhesion occurs during the manufacturing process such as cutting for application to the smart window due to the decrease in adhesion between the substrates.

Therefore, it is necessary to develop an electrode layer for a smart window, and a light control laminate that are capable of preventing damage since the adhesion is excellent between the substrates while reducing the thickness of the light control laminate so that poor adhesion does not occur during the manufacturing process.

### [Related Art Document]

### [Patent Document]

(Patent Document 1) Japanese Patent Publication No. 2018-010035

### [Disclosure]

### [Technical Problem]

The present disclosure aims to provide an electrode layer for a smart window, which is not easily separated during a process such as cutting by having excellent adhesion.

Further, the present disclosure aims to provide a light control laminate that can prevent defects or breakage during a process such as cutting by improving adhesion between substrates by including the electrode layer.

Further, the present disclosure aims to provide a light control laminate that does not include a separate substrate for forming an electrode layer, thereby simplifying the manufacturing process and significantly reducing the thickness.

Further, the present disclosure aims to provide a smart window including the light control laminate and an automobile or building window using the same.

However, the problems to be solved by the present disclosure are not limited to the problems mentioned above, and other problems not mentioned will be clearly understood by those skilled in the art from the description below.

### [Technical Solution]

The present disclosure relates to an electrode layer for a smart window, which has a thickness of 250 to 350 nm, an adhesive force of 3 mN or more, and a surface resistance of 150 Ω/□ or less.

The electrode layer may be formed of an electrode layer-forming composition including a conductive polymer.

The conductive polymer may include one or more selected from the group consisting of polythiophene, poly(3,4-ethylenedioxythiophene), polyaniline, polyacetylene, polydiacetylene, polyphenylene, polyphenylenevinylene, polyphenylene sulfide, poly(thienylene vinylene), poly(thiophene vinylene), polyfluorene, polypyrrole, poly(3,4-ethylenedioxythiophene):polystyrene sulfonate, poly(3,4-ethylenedioxythiophene): camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrene sulfonate, polythiophene: camphorsulfonic acid, polythiophene: toluenesulfonic acid, and polythiophene:dodecylbenzenesulfonic acid.

Furthermore, the present disclosure relates to a light control laminate including: a first polarizing plate; a first electrode layer which is formed on one surface of the first polarizing plate; a second polarizing plate facing the first polarizing plate; a second electrode layer which is formed on one surface of the second polarizing plate and faces the first electrode layer; and a liquid crystal layer which is provided between the first electrode layer and the second electrode layer, wherein the first electrode layer and the second electrode layer have a thickness of 250 to 350 nm, an adhesive force of 3 mN or more, and a surface resistance of 150 Ω/□ or less.

The first electrode layer and the second electrode layer may be formed of an electrode layer-forming composition including a conductive polymer.

The conductive polymer may include one or more selected from the group consisting of polythiophene, poly(3,4-ethylenedioxythiophene), polyaniline, polyacetylene, polydiacetylene, polyphenylene, polyphenylenevinylene, polyphenylene sulfide, poly(thienylene vinylene), poly(thiophene vinylene), polyfluorene, polypyrrole, poly(3,4-ethylenedioxythiophene):polystyrene sulfonate, poly(3,4-ethylenedioxythiophene): camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrene sulfonate, polythiophene: camphorsulfonic acid, polythiophene: toluenesulfonic acid, and polythiophene:dodecylbenzenesulfonic acid.

The first electrode layer and the second electrode layer may be ones in which a surface in contact with the liquid crystal layer is rubbing-aligned.

At least one of the first electrode layer and the second electrode layer may be formed in direct contact with one of the first polarizing plate and the second polarizing plate.

The liquid crystal layer may contain a polymer network and a liquid crystal compound, and the liquid crystal compound may be arranged with a uniform initial orientation.

The liquid crystal layer may contain a cured product of a liquid crystal layer-forming composition including a polymerizable monomer and a liquid crystal compound.

The liquid crystal layer-forming composition may include 10 to 30% by weight of the polymerizable monomer with respect to the total weight of the composition.

A liquid crystal behavior method of the liquid crystal layer may be one selected from the group consisting of a twisted nematic (TN) mode, a super twisted nematic (STN) mode, an in-plane switching (IPS) mode, a fringe-field switching (FFS) mode, an electrically controlled birefringence (ECB) mode, and a vertical alignment (VA) mode.

The liquid crystal behavior method of the liquid crystal layer may be a twisted nematic (TN) mode.

At least one of the first polarizing plate and the second polarizing plate may include one or more functional layers selected from the group consisting of a protective layer, a retardation matching layer (phase difference adjustment layer), and a refractive index adjustment layer.

The first polarizing plate and the second polarizing plate may have a thickness of 30 to 200 µm.

The light control laminate may further include one or more selected from the group consisting of a pressure-sensitive adhesive/adhesive layer, an ultraviolet-absorbing layer, and a hard coating layer.

Furthermore, the present disclosure relates to a smart window including the light control laminate.

Furthermore, the present disclosure relates to an automobile in which the smart window is applied to at least one of a front window, a rear window, a side window, a sunroof window, and an interior partition.

Furthermore, the present disclosure relates to a building window including the smart window.

### [Advantageous Effects]

According to the electrode layer for a smart window according to the present disclosure, since the adhesion is excellent and thus the electrode layer for a smart window is not easily separated during a process such as cutting for application to a smart window, the occurrence of defects can be prevented.

In addition, according to the light control laminate according to the present disclosure, since the electrode layer is included so that the adhesion between the substrates is excellent, and thus, the light control laminate is not easily separated during the process, defects or breakage can be prevented during the process.

In addition, according to the light control laminate according to the present disclosure, since the electrode layer is formed directly on a polarizing plate so that a separate substrate for forming the electrode layer is not included, the manufacturing process can be simplified and the thickness can be significantly reduced compared to the conventional light control laminate.

In addition, the present disclosure can provide a smart window including the light control laminate and an automobile or building window using the same.

### [Description of Drawings]

FIG. 1 is a drawing showing a laminated structure of a light control laminate according to one embodiment of the present disclosure.
FIGS. 2A to 2E are drawings showing laminated structures of polarizing plates according to one or more embodiments of the present disclosure.
FIG. 3 is a drawing showing a laminated structure of a light control laminate according to another embodiment of the present disclosure.

### [Specific Details for Carrying Out the Invention]

The present disclosure relates to an electrode layer for a smart window, which has a thickness of 250 to 350 nm, an adhesive force of 3 mN or more, and a surface resistance of 150 Ω/□ or less.

Furthermore, the present disclosure relates to a light control laminate including: a first polarizing plate; a first electrode layer which is formed on one surface of the first polarizing plate; a second polarizing plate facing the first polarizing plate; a second electrode layer which is formed on one surface of the second polarizing plate and faces the first electrode layer; and a liquid crystal layer which is provided between the first electrode layer and the second electrode layer, wherein the first electrode layer and the second electrode layer have a thickness of 250 to 350 nm, an adhesive force of 3 mN or more, and a surface resistance of 150 Ω/□ or less.

The light control laminate of the present disclosure is particularly suitable for a technical field capable of changing the light transmittance according to the application of voltage, and may be used, for example, in a smart window, etc.

A smart window refers to an optical structure that controls the amount of light or heat that passes through by changing the light transmittance according to the application of an electrical signal. That is, a smart window is provided so that it may be changed into a transparent, opaque, or translucent state by voltage, and is also called a variable transmittance glass, a light control glass, a smart glass, or the like.

Smart windows may be used as partitions for partitioning of the interior space of vehicles and buildings or protecting privacy, or as skylights disposed in openings of buildings, and may also be used as highway signs, bulletin boards, scoreboards, clocks, or advertising screens, and can be used as replacements for glass in transportation means such as windows or sunroofs of automobiles, buses, aircraft, ships, or trains.

The electrode layer for a smart window of the present disclosure has excellent adhesion so that the electrode layer is not separated easily, and the light control laminate of the present disclosure including the same can also prevent defects or breakage during the manufacturing process.

In addition, the light control laminate of the present disclosure can be used as a smart window in various technical fields described above, but since the electrode layer is formed directly on the polarizing plate, it does not include a separate substrate for forming the electrode layer, so it is thin and has an advantageous in flexural characteristic, and thus can be particularly suitably used for a smart window for vehicles or buildings. In one or more embodiments, a smart window to which the light control laminate of the present disclosure is applied may be used as a front window, a rear window, a side window, and a sunroof window of an automobile, or a window for a building, and in addition to the use for blocking external light, it may also be used for partitioning the internal space of an automobile or a building such as an internal partition, or for protecting privacy.

Hereinafter, with reference to the drawings, the embodiments of the present disclosure will be described in more detail. However, the following drawings attached to this specification illustrate preferred embodiments of the present disclosure, and serve to further understand the technical idea of the present disclosure together with the contents of the invention described above, so the present disclosure should not be interpreted as being limited to matters described in such drawings.

The terms used in this specification are for the purpose of describing embodiments and are not intended to limit the present disclosure. In this specification, the singular also includes the plural unless specifically stated in the phrase. For example, "polarizing plate" used in this specification may mean at least one of the first polarizing plate and the second polarizing plate, "electrode layer" may mean at least one of the first electrode layer and the second electrode layer, and "transparent conductive layer" may mean at least one of the first transparent conductive layer and the second transparent conductive layer.

The terms "comprises" and/or "comprising" used in this specification are used in the sense that they do not exclude the presence or addition of one or more other components, steps, operations, and/or elements other than the mentioned components, steps, operations, and/or elements. Throughout the specification, the same reference numerals refer to the same components.

The spatially relative terms "below", "bottom surface", "lower part", "above", "top surface", and "upper part" may be used to easily describe the correlation between one element or component and another element or component as illustrated in the drawings. The spatially relative terms should be understood as terms that include different directions of the elements when used or operated in addition to the directions illustrated in the drawings. For example, when an element illustrated in the drawings is flipped, an element described as "below" or "lower part" of another element may be put "above" the other element. Accordingly, the exemplary term "below" may include both the directions below and above. The elements may also be oriented in other directions, and thus the spatially relative terms may be interpreted according to the orientation.

The "plane direction" used in this specification may be interpreted as the direction orthogonal to the polarizing plate and/or the electrode layer, i.e., the direction of the user's view.

### < Electrode Layer for Smart Window >

The present disclosure provides an electrode layer applicable to a smart window.

The electrode layer for application to the smart window may be provided for driving a liquid crystal layer included in the smart window. Specifically, the thickness thereof may be 250 to 350 nm. The thickness of the electrode layer may mean the thickness of the final electrode layer when a physical orientation structure is formed by rubbing as described later. When the above thickness range is satisfied, it is advantageous to secure an appropriate surface resistance for driving without lowering the transmittance, and the adhesive force may be improved. In particular, when the thickness is less than 250 nm, scratch resistance decreases, which may cause adhesion defects to occur during the cutting process, and when the thickness exceeds 350 nm, the surface roughness increases, which may increase the surface resistance value.

In addition, the electrode layer may have an adhesive force of 3 mN or more, preferably 3 mN or more to 5 mN or less. When the above range is satisfied, the light control laminate may be prevented from being separated from other substrates when cutting for application to a smart window after manufacturing of the light control laminate, thereby preventing instability in the operation of the smart window due to a defect in the electrode layer.

In addition, the electrode layer may have a surface resistance of 150 Ω/□ or less, preferably 120 Ω/□ or more to 150 Ω/□ or less, and when the above range is satisfied, stable operation may be possible when the electrode layer is applied to a light control laminate and a smart window.

The electrode layer of the present disclosure is preferable in terms of operation stability since defects do not occur in the electrode layer when the adhesive force measured at a thickness of 250 to 350 nm is 3 mN or more particularly for application to a smart window, and it is necessary that the surface resistance be 150 Ω/□ or less in consideration of power loss and heat generation when operating a smart window.

The electrode layer of the present disclosure may have a transmittance of 50% or more for visible light, may contain a conductive polymer, may be prepared from an electrode layer-forming composition including, for example, a conductive polymer; and one or more selected from the group consisting of an organic binder, an organic solvent, a silane coupling agent, and a surfactant, and may further contain a residual amount of water according to the needs of the user. In this case, even if deformation due to external stress is applied to the electrode layer 200, cracks may be prevented from occurring, and further, surface resistance may be prevented from increasing excessively.

The conductive polymer may use a conventional or later-developed conductive polymer material, and may include, for example, one or more selected from the group consisting of polythiophene, poly(3,4-ethylenedioxythiophene), polyaniline, polyacetylene, polydiacetylene, polyphenylene, polyphenylenevinylene, polyphenylene sulfide, poly(thienylene vinylene), poly(thiophene vinylene), polyfluorene, polypyrrole, poly(3,4-ethylenedioxythiophene):polystyrene sulfonate, poly(3,4-ethylenedioxythiophene):camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrene sulfonate, polythiophene: camphorsulfonic acid, polythiophene: toluenesulfonic acid, and polythiophene:dodecylbenzenesulfonic acid, and preferably, it may be poly(3,4-ethylenedioxythiophene) or poly(3,4-ethylenedioxythiophene):polystyrene sulfonate.

The content of the conductive polymer is not particularly limited, but the conductive polymer may be contained in an amount of 10% by weight to 65% by weight, preferably, 10% by weight to 50% by weight, and more preferably, 11% by weight to 30% by weight, with respect to the total weight of the electrode layer-forming composition.

The organic binder may include one or more selected from the group consisting of a melamine resin, a polyester resin, a polyurethane resin, and a polyacrylic resin. In addition, the organic binder may be a water-dispersible resin.

In one embodiment, the organic binder may have a weight average molecular weight of 5,000 g/mol to 30,000 g/mol, preferably 10,000 g/mol to 20,000 g/mol.

The content of the organic binder is not particularly limited, but the organic binder may be contained in an amount of 1% by weight to 20% by weight, preferably, 1% by weight to 10% by weight, and more preferably, 1% by weight to 5% by weight, with respect to the total weight of the electrode layer-forming composition.

The organic solvent may include an alcohol-based organic solvent, an ether-based organic solvent, and/or an amide-based organic solvent.

The alcohol-based organic solvent serves to improve the coatability by lowering the surface tension of the electrode layer-forming composition. In one embodiment, the alcohol-based organic solvent may be an alcohol having 1 to 4 carbon atoms, and may use, for example, methanol, ethanol, propanol, isopropanol, n-butyl alcohol, etc.

The ether-based organic solvent may use a conventional or later-developed ether-based organic solvent, and may use, for example, propylene glycol monopropyl ether, propylene glycol monomethyl ether, ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, diethylene glycol-2-ethylhexyl ether, etc.

The amide-based organic solvent serves to improve the conductivity of the prepared electrode layer. In one embodiment, the amide-based organic solvent may use acetamide, N-methylacetamide, N-dimethylacetamide, N-methylpyrrolidone, etc.

The content of the organic solvent is not particularly limited, but the organic solvent may be contained in an amount of 10% by weight to 80% by weight, preferably, 40% by weight to 65% by weight, and more preferably, 45% by weight to 60% by weight, with respect to the total weight of the electrode layer-forming composition.

The silane coupling agent improves the adhesion of the electrode layer-forming composition, thereby serving to facilitate lamination of the electrode layer on a polarizing plate. In one embodiment, the silane coupling agent may include one or more selected from the group consisting of a trimethoxy-based silane, a triethoxy-based silane, a tetramethoxy-based silane and a tetraethoxy-based silane, and for example, the triethoxy-based silane may be 2-(3,4-epoxycyclohexyl)ethyltriethoxy silane, (3-aminopropyl)triethoxy silane, (pentafluorophenyl)triethoxy silane, (3-glycidyloxypropyl)triethoxy silane, or (4-chlorophenyl)triethoxy silane, and the trimethoxy-based silane may be (3-glycidyloxypropyl)trimethoxy silane, (3-chloropropyl)trimethoxy silane, (3-mercaptopropyl)trimethoxy silane, (3-glycidyloxypropyl)trimethoxy silane, (3-aminopropyl)trimethoxy silane, [3-(2-aminoethylamino)propyl]trimethoxy silane, (N,N-dimethylaminopropyl)trimethoxy silane, (3-bromopropyl)trimethoxy silane, or (3-iodopropyl)trimethoxy silane.

The silane coupling agent, in terms of improving the adhesion between the polarizing plate and the electrode layer, may be contained in an amount of 0.05% by weight to 0.3% by weight with respect to the total weight of the electrode layer-forming composition.

The surfactant may be a silicone-based surfactant or an acetylene-based surfactant, and the silicone-based surfactant may be a modified silicone-based surfactant.

For example, commercial products of the silicone-based surfactant may include BYK-378, etc. from BYK, and commercial products of the acetylene-based surfactant may include Dynol 604, etc. from Air Products.

The content of the surfactant is not particularly limited, but the surfactant may be contained in an amount of 0.02% by weight to 0.4% by weight, preferably 0.1% by weight to 0.4% by weight with respect to the total weight of the electrode layer-forming composition.

The electrode layer may have a physical orientation structure formed on at least a portion of the area to impart orientation properties to the liquid crystal compound provided in the liquid crystal layer.

Conventionally, an optical laminate including a liquid crystal layer has been manufactured by forming a separate alignment film in order to impart orientation properties to the liquid crystal compound provided in the liquid crystal layer, but the optical laminate according to the present disclosure may form a physical orientation structure on the electrode layer itself containing a conductive polymer, thereby preventing problems caused by being provided with conventional alignment films, such as uneven thickness or reduced adhesion depending on drying conditions of the alignment films.

The method for forming the physical orientation structure may use a method commonly used in the art, and for example, the physical orientation structure may be formed by rubbing using a rubbing roller that has a rubbing cloth wrapped around it.

### <Light Control Laminate>

The light control laminate of the present disclosure is not particularly limited as long as it includes the above-described electrode layer for a smart window.

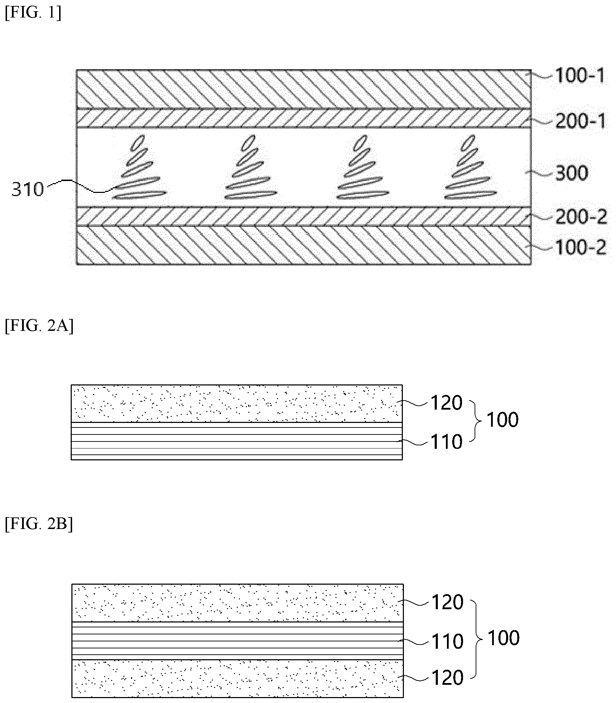

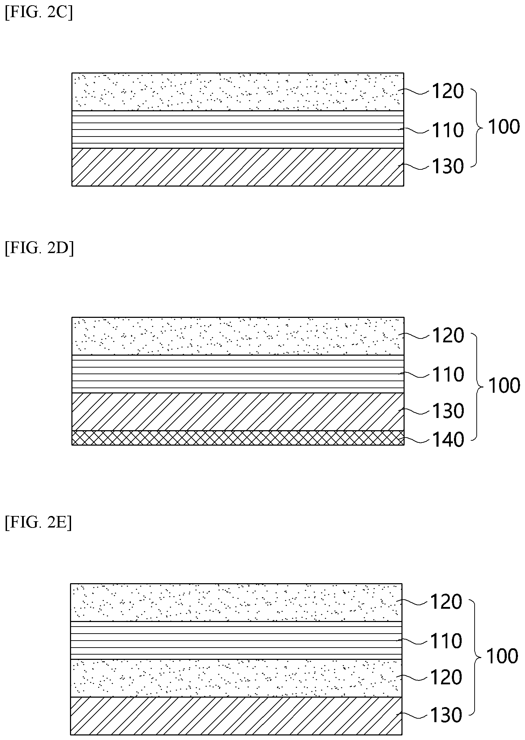

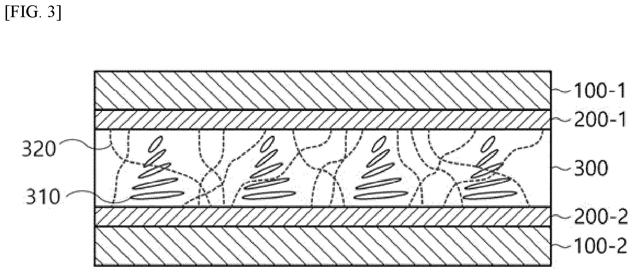

Specifically, FIG. 1 is a drawing showing a laminated structure of a light control laminate according to one embodiment of the present disclosure. In addition, FIG. 2 is drawings showing laminated structures of polarizing plates according to one or more embodiments of the present disclosure, and FIG. 3 is a drawing showing a laminated structure of a light control laminate according to another embodiment of the present disclosure.

Referring to FIG. 1, the light control laminate according to one embodiment of the present disclosure may include a first polarizing plate 100-1, a second polarizing plate 100-2, a first electrode layer 200-1, a second electrode layer 200-2, and a liquid crystal layer 300.

Referring to FIG. 2, the polarizing plate 100 includes a polarizer 110, and may further include a functional layer, such as a protective layer 120, a retardation matching layer 130, a refractive index adjustment layer 140 or the like, on one or both surfaces of the polarizer 110.

For example, the polarizing plate 100 may include a polarizer 110 and a protective layer 120 laminated on one or both surfaces of the polarizer 110 (see FIGS. 2A and 2B), may include a polarizer 110, a protective layer 120 laminated on one surface of the polarizer 110, and a retardation matching layer 130 laminated on the other surface opposite to the one surface of the polarizer 110 (see FIG. 2C), may include a polarizer 110, a protective layer 120 laminated on one surface of the polarizer, and a retardation matching layer 130 and a refractive index adjustment layer 140 sequentially laminated on the other surface opposite to the one surface of the polarizer 110 (see FIG. 2D), and may include a polarizer 110, a protective layer 120 laminated on one surface of the polarizer, and a protective layer 120 and a retardation matching layer 130 sequentially laminated on the other surface opposite to the one surface of the polarizer 110 (see FIG. 2E).

The polarizer 110 may use a conventional or later-developed polarizer, and for example, a stretchable polarizer, a coated polarizer, or the like may be used.

In one embodiment, the stretchable polarizer may include a stretched polyvinyl alcohol (PVA) based resin. The polyvinyl alcohol (PVA) based resin may be a polyvinyl alcohol-based resin obtained by saponifying a polyvinyl acetate-based resin. Examples of the polyvinyl acetate-based resin may include copolymers of vinyl acetate and other monomers copolymerizable therewith, etc. in addition to polyvinyl acetate, which is a homopolymer of vinyl acetate. The other monomers may include unsaturated carboxylic acid-based monomers, unsaturated sulfonic acid-based monomers, olefin-based monomers, vinyl ether-based monomers, and acrylamide-based monomers having an ammonium group. In addition, the polyvinyl alcohol (PVA) based resin may include a modified one, and may be, for example, polyvinyl formal or polyvinyl acetal modified with aldehydes.

In one embodiment, the coated polarizer may be formed by a liquid crystal coating composition, wherein the liquid crystal coating composition may include a reactive liquid crystal compound, a dichroic dye, etc.

The reactive liquid crystal compound may refer to a compound that includes, for example, a mesogen skeleton, etc., and also includes one or more polymerizable functional groups. Such reactive liquid crystal compounds are known in various ways under the name of so-called reactive mesogen (RM). The reactive liquid crystal compound may form a cured film in which a polymer network is formed while maintaining liquid crystal arrangement by being polymerized by light or heat.

The reactive liquid crystal compound may be a monofunctional or polyfunctional reactive liquid crystal compound. The monofunctional reactive liquid crystal compound is a compound having one polymerizable functional group, and the polyfunctional reactive liquid crystal compound may refer to a compound having two or more polymerizable functional groups.

The dichroic dye is a component that is included in a liquid crystal coating composition to impart polarization characteristics, and has properties in which the absorbance in the long-axis direction of the molecule and the absorbance in the short-axis direction are different. The dichroic dye may use a dichroic dye that has been developed in the past or will be developed in the future, and may include, for example, one or more selected from the group consisting of azo dyes, anthraquinone dyes, perylene dyes, merocyanine dyes, azomethine dyes, phthaloperylene dyes, indigo dyes, dioxadine dyes, polythiophene dyes, and phenoxazine dyes.

The liquid crystal coating composition may further include a solvent capable of dissolving the reactive liquid crystal compound and the dichroic dye, and for example, propylene glycol monomethyl ether acetate (PGMEA), methyl ethyl ketone (MEK), xylene, chloroform, etc. may be used. In addition, the liquid crystal coating composition may further include a leveling agent, a polymerization initiator, etc. within a range that does not impair the polarization characteristics of the coating film.

The protective layer 120 is intended to preserve the polarization characteristics of the polarizer 110 from a post-process and an external environment, and may be implemented in the form of a protective film, etc.

The protective layer 120 may be formed in direct contact with one or both surfaces of the polarizer 110 as shown in FIGS. 2A and 2B, but is not limited thereto. For example, the protective layer may be used as a multilayer structure in which one or more protective layers are continuously laminated, and may be formed in direct contact with another functional layer.

In one or more embodiments, the protective layer 120 may contain one or more selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation matching layer 130 is intended to complement the optical characteristics of the light control laminate, and may be implemented in the form of a retardation film, etc., and may use a retardation film, etc. that have been developed in the past or will be developed later. For example, a quarter-wave plate (1/4 wave plate) or a half-wave plate (1/2 wave plate) for delaying the phase of light may be used, and these may be used alone or in combination.

The retardation matching layer 130 may be formed in direct contact with one surface of the polarizer 110 as shown in FIGS. 2C and 2D, but is not limited thereto. For example, as shown in FIG. 2E, the retardation matching layer 130 is formed on one surface of the protective layer 120 so that the polarizer 110, the protective layer 120, and the retardation matching layer 130 may be sequentially laminated.

The retardation matching layer 130 may use a polymer stretched film or a liquid crystal polymerization film in which a polymer film capable of imparting optical anisotropy by stretching is stretched in an appropriate manner.

In one embodiment, the polymer stretched film may use a polymer layer including a polyolefin such as polyethylene (PE) or polypropylene (PP), a cycloolefin polymer (COP) such as polynorbornene, a polyester such as polyvinyl chloride (PVC), polyacrylonitrile (PAN), polysulfone (PSU), an acrylic resin, polycarbonate (PC), or polyethylene terephthalate (PET), a cellulose ester-based polymer such as polyacrylate, polyvinyl alcohol (PVA), or triacetyl cellulose (TAC), or a copolymer of two or more monomers among the monomers forming the polymer.

The method for obtaining the polymer stretched film is not particularly limited, and for example, the polymer stretched film may be obtained by forming the polymer material into a film form and then stretching it. The method for forming the polymer material into a film form is not particularly limited, and it is possible to form the polymer material into a film by known methods such as injection molding, sheet molding, blow molding, injection blow molding, inflation molding, extrusion molding, foam molding, and cast molding, and secondary processing molding methods such as pressure molding and vacuum molding may also be used. Among them, extrusion molding and cast molding are preferably used. At this time, for example, an extruder or the like having a T-die, a circular die, etc. mounted thereon may be used to perform extrusion molding of an unstretched film. When obtaining a molded product by extrusion molding, a material in which various resin components, additives, etc. are melt-mixed in advance may be used or the unstretched film may also be molded through melt-mixing during extrusion molding. In addition, a solvent common to various resin components, for example, a solvent such as chloroform, methylene dichloride, or the like may be used to dissolve various resin components, and then cast and dry-solidified, thereby cast-forming an unstretched film.

The polymer stretched film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method by tenter stretching, a biaxial stretching method by tubular stretching, etc. to enable a biaxially stretched film to be manufactured.

The liquid crystal polymerization film may include a reactive liquid crystal compound in a polymerized state. The above description of the reactive liquid crystal compound of the coated polarizer may be equally applied to the reactive liquid crystal compound.

In one or more embodiments, the thickness of the retardation matching layer 130 may be 10 to 100 µm in the case of a polymer stretched film, and 0.1 to 5 µm in the case of a liquid crystal polymerization film.

The refractive index adjustment layer 140 may be provided to compensate for the refractive index difference of the light control laminate due to the electrode layer 200, and may play a role in improving visibility characteristics, etc. by reducing the refractive index difference. In addition, the refractive index adjustment layer 140 may be provided to correct the color caused by the electrode layer 200. Meanwhile, when the electrode layer has a pattern, the difference in transmittance between the pattern area where the pattern is formed and the non-pattern area where the pattern is not formed may be compensated for through the refractive index adjustment layer 140.

Specifically, the electrode layer 200 is laminated adjacent to another member (e.g., polarizer 110, etc.) having a refractive index different from that of the electrode layer 200, and the difference in the light transmittance may be caused due to the difference in the refractive index with the adjacent other layer, and in particular, when a pattern is formed in the electrode layer, there may occur a problem in which the pattern area and the non-pattern area are visible so that they can be distinguished. Therefore, the refractive index adjustment layer 140 may be included to compensate for the refractive index, thereby reducing the difference in the light transmittance of the light control laminate, and allowing the pattern area and non-pattern area not to be distinguished and recognized particularly when a pattern is formed on the electrode layer.

In one embodiment, the refractive index of the refractive index adjustment layer 140 may be appropriately selected depending on the material of the adjacent other member, but may be preferably 1.4 to 2.6, and more preferably, 1.4 to 2.4. In this case, it is possible to prevent light loss due to a sharp difference in refractive index between other members such as the polarizer 110, etc. and the electrode layer 200.

The refractive index adjustment layer 140 is not particularly limited as long as it can prevent a sharp difference in refractive index between other members such as the polarizer 110 and the electrode layer 200, and a compound used in the formation of a conventional or later-developed refractive index adjustment layer may be used, and for example, it may be formed from a composition for forming a refractive index adjustment layer that contains a polymerizable isocyanurate compound.

In one embodiment, the polarizing plate 100 may further include other functional layers for assisting or reinforcing the characteristics of the polarizer in addition to the functional layers described above, and may further include, for example, an overcoating layer, etc. in order to further improve mechanical durability.

The thickness of each functional layer other than the retardation matching layer 130 may be 1 to 30 µm, and more preferably 2 to 20 µm. The thickness may refer to the thickness after drying, and when each thickness satisfies the above range, the functions of each functional layer may be performed without any problems while enabling thinning.

In one or more embodiments of the present disclosure, the polarizing plate 100 may have a thickness of 30 to 200 µm, preferably 30 to 170 µm, and more preferably 50 to 150 µm. In this case, the polarizing plate 100 can prevent lifting when bonded to glass for application to a smart window while maintaining optical characteristics, and can prevent the thickness of the smart window from increasing.

The electrode layer 200 is provided for driving the liquid crystal layer 300, and the description of the electrode layer described in <Electrode Layer for Smart Window> may be applied without limitation.

The electrode layer 200 included in the light control laminate of the present disclosure may be formed in direct contact with the polarizing plate 100. For example, as shown in FIG. 1, the first electrode layer 200-1 may be formed in direct contact with the first polarizing plate 100-1, and the second electrode layer 200-2 may be formed in direct contact with the second polarizing plate 100-2.

Conventionally, a light control laminate used in the manufacture of smart windows, etc., was manufactured by forming an electrode layer for driving a liquid crystal on one surface of a substrate and bonding the other surface of the substrate to a polarizing plate. However, the light control laminate according to the present disclosure is characterized in that it improves the transmittance and flexural characteristics in the light transmitting mode while reducing the thickness of the laminate by directly forming an electrode layer on one surface of a polarizing plate without including a portion of a separate substrate for forming the electrode layer.

In one embodiment, the first electrode layer 200-1 and/or the second electrode layer 200-2 formed in direct contact with at least one of the first polarizing plate 100-1 and the second polarizing plate 100-2 means that it is formed on the polarizing plate by sharing a contact surface with the first polarizing plate 100-1 and/or the second polarizing plate 100-2 without including a separate substrate. For example, the first electrode layer 200-1 and/or the second electrode layer 200-2 may be formed by being deposited on the upper surface of a coating layer formed on the first polarizing plate 100-1 and/or the second polarizing plate 100-2.

At this time, the first electrode layer 200-1 and/or the second electrode layer 200-2 may be formed in direct contact with the surface of the polarizing plate on which pretreatment has been performed after performing pretreatment such as corona treatment or plasma treatment on one surface of the polarizing plate in order to improve adhesive force with at least one of the first polarizing plate 100-1 and the second polarizing plate 100-2. The pretreatment is not limited to corona treatment or plasma treatment, and any conventional or later-developed pretreatment process may be used within a scope that does not hinder the purpose of the present disclosure. Preferably, the surface roughness (Ra) of the polarizing plate 100 can be made 0.5 to 1.0 µm through the pretreatment process. The surface roughness (Ra) of the polarizing plate is determined by considering the anchoring effect between the polarizing plate 100 and the electrode layer 200 and the wetting properties during electrode layer coating. Through this, even if the electrode layer 200 of the present disclosure having a thickness of 250 to 350 µm is formed in direct contact, the adhesive force can be made 3 mN or more and the surface resistance can be made 150 Ω/□ or less.

In another embodiment of the present disclosure, the first electrode layer 200-1 and/or the second electrode layer 200-2 formed in direct contact with at least one of the first polarizing plate 100-1 and the second polarizing plate 100-2 may be formed in direct contact with the polarizing plate with a highly adhesive layer as a primerprovided on one surface of the polarizing plate being interposed therebetween in order to improve adhesive force with the polarizing plate. The highly adhesive layer may use a pressure sensitive adhesive that is developed conventionally or later, and in one or more embodiments, an acrylic pressure sensitive adhesive, a rubber-based pressure sensitive adhesive, a silicone-based pressure sensitive adhesive, a urethane-based pressure sensitive adhesive, a polyvinyl alcohol-based pressure sensitive adhesive, a polyvinyl pyrrolidone-based pressure sensitive adhesive, a polyacrylamide-based pressure sensitive adhesive, a cellulose-based pressure sensitive adhesive, a vinyl alkyl ether-based pressure sensitive adhesive, etc. may be used. The pressure sensitive adhesive is not particularly limited as long as it has pressure-sensitive adhesive force and viscoelasticity, but in terms of ease of acquisition, etc., it may be preferably an acrylic pressure sensitive adhesive, and it may include, for example, a (meth)acrylate copolymer, a crosslinking agent, a solvent, etc.

The electrode layer 200 may be a physical orientation structure formed on at least a portion of the area to impart orientation properties to the liquid crystal compound 310 provided in the liquid crystal layer 300.

Conventionally, an optical laminate including a liquid crystal layer has been manufactured by forming a separate alignment film in order to impart orientation properties to the liquid crystal compound provided in the liquid crystal layer, but the optical laminate according to the present disclosure forms a physical orientation structure on the electrode layer itself including a conductive polymer, thereby preventing problems that are caused by providing the conventional alignment film, e.g., thickness unevenness, reduced adhesion, etc. due to drying conditions of the alignment film.

The method for forming the physical orientation structure may use a method commonly used in the art, and the physical orientation structure may be formed by, for example, rubbing using a rubbing roller that has a rubbing cloth wrapped around it.

In one embodiment, the electrode layer 200 may have a thickness of 250 to 350 nm, and the thickness of the electrode layer may refer to the thickness of the final electrode layer after the physical orientation structure is formed by rubbing. When the thickness of the electrode layer satisfies the above range, while securing a predetermined transmittance, the change in characteristics due to external stress is not large, and a thin electrode film can be manufactured, and the adhesive force with the liquid crystal layer can be improved.

The electrode layer 200 of the present disclosure may have an adhesive force of 3 mN or more, preferably 3 mN or more to 5 mN or less, and when the above range is satisfied, the electrode layer 200 can be prevented from being separated from other substrates when cutting for application to a smart window after manufacturing a light control laminate.

In addition, the electrode layer 200 may have a surface resistance of 150Ω/□ or less, preferably 120Ω/□ or more to 150Ω/□ or less, and when the above range is satisfied, there is an advantage in that the product can be stably driven only with the electrode layer 200 itself in which the physical orientation structure is formed without an alignment film.

In one embodiment, the light control laminate may further include a transparent conductive layer in addition to the electrode layer 200.

The transparent conductive layer may be disposed between the polarizing plate 100 and the electrode layer 200, and may be implemented in the form of a first transparent conductive layer disposed between the first polarizing plate 100-1 and the first electrode layer 200-1, and a second transparent conductive layer disposed between the second polarizing plate 100-2 and the second electrode layer 200-2. In addition, the transparent conductive layer may include only one transparent conductive layer in the first transparent conductive layer and the second transparent conductive layer.

The transparent conductive layer preferably has a transmittance of 50% or more for visible light, and may include, for example, one or more selected from the group consisting of a transparent conductive oxide, a metal, a carbon-based material, a conductive ink, and a nanowire, but is not limited thereto, and a material of a conventional or later-developed transparent conductive layer may be used.

In one or more embodiments, the transparent conductive oxide may include one or more selected from the group consisting of indium tin oxide (ITO), indium zinc oxide (IZO), indium zinc tin oxide (IZTO), aluminum zinc oxide (AZO), gallium zinc oxide (GZO), fluorine tin oxide (FTO), zinc oxide (ZnO), etc. In addition, the metal may include one or more selected from the group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloys containing at least one of these, etc., and may include, for example, a silver-palladium-copper (APC) alloy or a copper-calcium (CuCa) alloy. The carbon-based material may include one or more selected from the group consisting of carbon nanotubes (CNTs), graphene, etc., and the conductive ink may be an ink in which a metal powder and a curable polymer binder are mixed, and the nanowire may be, for example, a silver nanowire (AgNW).

In addition, the transparent conductive layer may be formed in a structure having two layers or more by combining the above materials. For example, the transparent conductive layer may be formed into a two-layer structure including a metal layer and a transparent conductive oxide layer to lower the reflectivity of incident light and increase the transmittance.

In one embodiment, the transparent conductive layer may have a thickness of 100 nm to 1,000 nm, preferably, may have a thickness of 130 nm to 800 nm, and more preferably, may have a thickness of 150 nm to 600 nm. When the thickness of the transparent conductive layer satisfies the above range, there is an advantage in terms of securing an appropriate surface resistance for driving and improving the appearance quality of the product without lowering the transmittance of the product.

According to an exemplary embodiment of the present disclosure, when the optical laminate includes a transparent conductive layer, the transparent conductive layer may be formed in direct contact with the polarizing plate 100, and for example, the first transparent conductive layer may be formed in direct contact with the first polarizing plate 100-1, and/or the second transparent conductive layer may be formed in direct contact with the second polarizing plate 100-2. In this case, the contents related to the above-described electrode layer 200 being formed in direct contact with the polarizing plate 100 may be equally applied.

When the light control laminate further includes the transparent conductive layer described above separately from the electrode layer 200, it is preferable in that the light control laminate further has an advantage in terms of improving the appearance quality of the product.

Meanwhile, when the electrode layer 200 of the present disclosure is not rubbing-aligned, an alignment film may be provided between the electrode layer 200 and the liquid crystal layer 300, and the alignment film is for adding orientation properties to the liquid crystal compound 310, and is preferably photo-aligned. The alignment film may be manufactured by applying and curing an alignment film coating composition including an alignment polymer, a photopolymerization initiator, and a solvent. The alignment polymer is not particularly limited, but may use a polyacrylate-based resin, a polyamic acid resin, a polyimide-based resin, a polymer containing a cinnamate group, etc., and a conventional or later-developed polymer capable of showing orientation properties may be used.

The liquid crystal layer 300 included in the light control laminate of the present disclosure may change the driving mode of the light control laminate to a light transmitting mode or a light blocking mode by adjusting the transmittance of light incident from one or a plurality of directions according to the electric field generated by the electrode layer 200.

Referring to FIG. 3, the liquid crystal layer 300 may contain a polymer network 320 and a liquid crystal compound 310, and the liquid crystal compound 310 may be arranged with a uniform initial orientation, and may include a cured product of a liquid crystal layer-forming composition including a polymerizable monomer and a liquid crystal compound 310, and may be located, for example, in a space provided between the first electrode layer 200-1 and the second electrode layer 200-2 in the light control region.

Conventionally, optical laminates have necessarily had to include sealants and spacers in order to maintain a certain space, i.e., a cell gap, in which liquid crystal compounds are provided within the liquid crystal layer. However, in the case of including a column spacer in the liquid crystal layer in order to maintain the cell gap, the manufacturing cost increases as the manufacturing process becomes complicated, and there is a problem in that the transmittance changes as the alignment film is damaged in the process of forming the spacer by irradiating the photoresist with ultraviolet rays. In addition, when a ball spacer is used to maintain the cell gap of the liquid crystal layer, there are problems in that it is difficult to maintain a constant optical color within the plane due to the inability to maintain a strong cell gap, current short circuit of the optical laminate occurs, etc. In addition, when a sealant is used to maintain the cell gap of the liquid crystal layer, there is a problem in that the appearance quality may deteriorate due to visibility of the sealant, defects in the sealant bursting may occur during handling of the optical laminate, or defects in the optical laminate may occur due to differences in thickness with the spacer included together.

The liquid crystal layer 300 included in the light control laminate of the present disclosure may contain a polymer network 320 together with a liquid crystal compound 310, thereby enabling the cell gap of the liquid crystal layer to be appropriately maintained without including a separate sealant and/or spacer. In addition, since the cell gap is maintained by a single configuration of the polymer network rather than a combination of a sealant and a spacer, there is an advantage in that defects due to a difference in the thickness between the sealant and the spacer can be fundamentally blocked.

The liquid crystal compound 310 is not particularly limited as long as it is driven by an electric field and can control the light transmittance, and a conventional or later-developed liquid crystal compound may be used, and for example, the contents regarding the reactive liquid crystal compound of the above-described coated polarizer may be applied equally.

The liquid crystal compound may include a chiral nematic (cholesteric) liquid crystal compound, and the chiral nematic liquid crystal compound may include a nematic liquid crystal compound and a chiral compound.

The nematic liquid crystal compound has long rod-shaped molecules arranged parallel to each other, and although there is no regularity in the central position of the molecules, it has an order in the direction of the molecular axis. Since each molecule of the nematic liquid crystal compound may move freely in the long axis direction, the viscosity is small and the fluidity is good, and since the direction of each molecule is almost equal up and down, the polarization is canceled so that the nematic liquid crystal compound generally does not exhibit ferroelectricity. The type of the nematic liquid crystal compound is not particularly limited, and as long as any nematic liquid crystal compound including a mesogenic group may be used without limitation.

Chiral compounds are compounds whose three-dimensional structures are symmetrical to each other like the relationship between the left and right hands, and although they have the same chemical structure and physical properties, they have different three-dimensional structures because they are mirror images of each other. When a certain amount of a chiral compound is included in the nematic liquid crystal compound, it may induce a spiral period. The type of the chiral compound may be used without being particularly limited as long as it does not damage the liquid crystal properties of the liquid crystal compound, for example, nematic regularity, and may induce a desired spiral period.

The chiral compound for inducing a spiral period in the liquid crystal compound is necessary to at least include chirality in its molecular structure. As the chiral compound, for example, a compound having one or more asymmetric carbons, a compound having an asymmetric point on a heteroatom such as a chiral amine, chiral sulfoxide or the like, or a compound having an axially asymmetric, optically active site, such as cumulene or binaphthol may be exemplified.

The chiral compound may be, for example, a low molecular weight compound having a molecular weight of 1,500 or less. For example, as the chiral compound, a commercially available chiral nematic liquid crystal, for example, a chiral dopant liquid crystal S-811 commercially available from Merck, Paliocolor LC 756 (prepared by BASF), or the like may be used, but is not limited thereto.

The chiral nematic liquid crystal compound may include 75 to 99% by weight of the nematic liquid crystal compound and 1 to 25% by weight of the chiral compound with respect to the total weight of the chiral nematic liquid crystal compound, but is not limited thereto. The contents of the nematic liquid crystal compound and the chiral compound may be appropriately adjusted within the above range to adjust the spiral period, i.e., the pitch, of the chiral nematic liquid crystal compound. The pitch of the chiral nematic liquid crystal compound is not particularly limited, but may be 5 to 20 µm.

The liquid crystal behavior method of the liquid crystal layer 300 is not particularly limited, and for example, a twisted nematic (TN) mode, a super twisted nematic (STN) mode, an in-plane switching (IPS) mode, a fringe-field switching (FFS) mode, an electrically controlled birefringence (ECB) mode, and a vertical alignment (VA) mode may be used, and preferably a twisted nematic (TN) mode may be used.

Since the liquid crystal layer 300 of the present disclosure may exist in a form in which the liquid crystal compound 310 is mixed with the polymer network 320 without the liquid crystal compound 310 being phase-separated in the form of droplets or capsules while containing the liquid crystal compound 310 and the polymer network 320, and the liquid crystal compound 310 may be arranged with a uniform initial orientation within the liquid crystal layer 300, the liquid crystal layer 300 may implement a light transmitting mode and a light blocking mode by adjusting the transmittance of light incident from one or a plurality of directions according to the electric field generated by the electrode layer 200. Therefore, the liquid crystal layer 300 may exhibit an excellent light blocking rate compared to conventional polymer dispersed liquid crystals that implement a light blocking mode by scattering incident light. In addition, the light control laminate of the present disclosure has advantages in that a light transmitting mode may be implemented in a state that voltage is not applied by appropriately adjusting the transmission axis of the polarizing plate 100 and the optical axis of the liquid crystal layer 300, and in addition, power consumption may be reduced compared to conventional polymer dispersed liquid crystals in that the application voltage required in driving is low compared to conventional polymer dispersed liquid crystals in which liquid crystals are arranged in a disorderly manner.

The liquid crystal layer 300 may include a cured product of a liquid crystal layer-forming composition including a polymerizable monomer and a liquid crystal compound 310.

The polymerizable monomer refers to a compound that forms a polymer network by a photopolymerization reaction or a thermal polymerization reaction, and is not particularly limited thereto. For example, the polymerizable monomer may include an acrylate-based monomer, and may include one or more selected from the group consisting of isobornyl acrylate, caprolactone acrylate, triethylene glycol diacrylate, trimethylolpropane triacrylate, pentaerythritol triacrylate, and dipentaerythritol pentaacrylate.

The polymerizable monomer may include one or more monomers selected from a monofunctional monomer to a tetrafunctional monomer, and preferably may include a trifunctional monomer. A polyfunctional monomer has advantages in that it may have excellent compatibility with the liquid crystal without impacting the liquid crystal, and may exhibit appropriate phase separation with the liquid crystal.

The liquid crystal layer-forming composition may include the polymerizable monomer in an amount of 10 to 30% by weight, and preferably 10 to 20% by weight, with respect to the total weight of the composition. When the liquid crystal layer-forming composition includes the polymerizable monomer in the above content range, since there are advantages in that the degree of curing of the polymer network formed therefrom is sufficient, so that the cell gap of the liquid crystal layer may be stably maintained, and excellent light transmittance and adhesion may be obtained, it is preferable.

The method for forming a liquid crystal layer 300 using the liquid crystal layer-forming composition is not particularly limited, and for example, the liquid crystal layer 300 may be formed by applying the liquid crystal layer-forming composition onto a first electrode layer having a rubbing-aligned surface and photocuring or thermally curing the same.

Separately from the point that the light control laminate according to the present disclosure may maintain a stable cell gap even without including a sealant and a spacer by including a polymer network 320 in the liquid crystal layer 300, if necessary, the light control laminate may further include one or more of a sealant and a spacer within a range that does not impair the purpose of the present disclosure.

The sealant may include a curable resin as a base resin. As the base resin, an ultraviolet-curable resin or a thermosetting resin known in the art as one that may be usable for a sealant in the art may be used. The ultraviolet-curable resin may be a polymer of an ultraviolet-curable monomer. The thermosetting resin may be a polymer of a thermosetting monomer.

For example, an acrylate-based resin, an epoxy-based resin, a urethane-based resin, a phenol-based resin, or mixtures of the resins may be used as the base resin of the sealant. **In** one embodiment, the base resin may be an acrylate-based resin, and the acrylate-based resin may be a polymer of an acrylic monomer. The acrylic monomer may be, for example, a polyfunctional acrylate. **In** another embodiment, the sealant may further include a monomer component in the base resin. The monomer component may be, for example, a monofunctional acrylate. **In** the present specification, a monofunctional acrylate may mean a compound having one acrylic group, and a polyfunctional acrylate may mean a compound having two or more acrylic groups. The curable resin may be cured by irradiation with ultraviolet rays and/or heating. The ultraviolet irradiation conditions or heating conditions may be appropriately selected within a range that does not impair the purpose of the present application. The sealant may further include an initiator, for example, a photoinitiator or a thermal initiator, if necessary.

The sealant may be formed by a method commonly used in the art, and may be formed, for example, by drawing the sealant onto the outer surface (i.e., the inactive area) of the liquid crystal layer using a dispenser having a nozzle.

The spacer may include at least one of a ball spacer and a column spacer, and particularly preferably is a ball spacer. The ball spacer may be one or more, and is preferably 1 to 10 µm in diameter. In addition, when viewed in a planar direction, the area occupied by the ball spacer in the liquid crystal layer 300 is preferably 0.01 to 10% with respect to the area of the liquid crystal layer 300 in terms of user visibility and transmittance improvement in a light transmitting mode.

The light control laminate of the present disclosure may further include other members within a range that does not impair the purpose of the present disclosure, and may further include, for example, a pressure-sensitive adhesive/adhesive layer, an ultraviolet-absorbing layer, a hard coating layer, etc.

The pressure-sensitive adhesive/adhesive layer may be formed using an adhesive or a pressure-sensitive adhesive, and it is preferable that the pressure-sensitive adhesive/adhesive layer has appropriate pressure-sensitive adhesive/adhesive force, and transparency and thermal stability at the same time so that peeling, bubbles, etc. do not occur when handling the light control laminate.

The adhesive may use a conventional or later-developed adhesive, and for example, a photocurable adhesive may be used.

The photocurable adhesive exhibits strong adhesive force by being crosslinked and cured by receiving active energy rays such as ultraviolet (UV) rays, electron beams (EB), etc., and may be composed of a reactive oligomer, a reactive monomer, a photopolymerization initiator, etc.

The reactive oligomer is an important component determining the characteristics of the adhesive, and forms a cured film by forming a polymer bond by a photopolymerization reaction. Usable reactive oligomers include polyester-based resins, polyether-based resins, polyurethane-based resins, epoxy-based resins, polyacrylic resins, silicone-based resins, etc.

The reactive monomers play a role of crosslinkers and diluents of the above-mentioned reactive oligomers and affect the adhesive properties. Usable reactive monomers may include monofunctional monomers, polyfunctional monomers, epoxy-based monomers, vinyl ethers, cyclic ethers, etc.

The photopolymerization initiator absorbs light energy to generate radicals or cations, thereby playing a role of initiating photopolymerization, and an appropriate one may be selected and used depending on the photopolymerization resin.

The pressure-sensitive adhesive may use a conventional or later-developed pressure-sensitive adhesive, and in one or more embodiments, an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, etc. may be used. The pressure-sensitive adhesive is not particularly limited as long as it has pressure-sensitive adhesive force and viscoelasticity, but in terms of ease of acquisition, etc., it may be preferably an acrylic pressure-sensitive adhesive, and it may include, for example, a (meth)acrylate copolymer, a crosslinking agent, a solvent, etc.

The crosslinking agent may use a conventional or later-developed crosslinking agent, and may include, for example, a polyisocyanate compound, an epoxy resin, a melamine resin, a urea resin, dialdehydes, a methylol polymer, etc., and preferably, a polyisocyanate compound.

The solvent may include a common solvent used in the field of resin compositions, and for example, solvents such as: alcohol-based compounds such as methanol, ethanol, isopropanol, butanol, propylene glycol methoxy alcohol, etc.; ketone-based compounds such as methyl ethyl ketone, methyl butyl ketone, methyl isobutyl ketone, diethyl ketone, dipropyl ketone, etc.; acetate-based compounds such as methyl acetate, ethyl acetate, butyl acetate, propylene glycol methoxy acetate, etc.; cellosolve-based compounds such as methyl cellosolve, ethyl cellosolve, propyl cellosolve, etc.; and hydrocarbon-based compounds such as hexane, heptane, benzene, toluene, xylene and etc. may be used. These may be used alone or in combination of two or more.

The thickness of the pressure-sensitive adhesive/adhesive layer may be appropriately determined depending on the type of resin that plays a role of the pressure-sensitive adhesive/adhesive, the pressure-sensitive adhesive/adhesive strength, the environment in which the pressure-sensitive adhesive/adhesive is used, etc. In one embodiment, the pressure-sensitive adhesive/adhesive layer may have a thickness of 0.01 to 50 µm, preferably 0.05 to 20 µm, and more preferably 0.1 to 10 µm, in order to secure sufficient pressure-sensitive adhesive/adhesive force and minimize the thickness of the light control laminate.

The ultraviolet-absorbing layer is not particularly limited as long as it is for preventing deterioration of the light control laminate due to ultraviolet rays, and for example, salicylic acid-based ultraviolet absorbers (phenyl salicylate, p-tert-butyl salicylate, etc.), benzophenone-based ultraviolet absorbers (2,4-dihydroxybenzophenone, 2,2'-dihydroxy-4,4'-dimethoxybenzophenone, etc.), benzotriazole-based ultraviolet absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched dodecyl)-4-methylphenol, a mixture or the like of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, cyanoacrylate-based ultraviolet absorbers (2'-ethylhexyl-2-cyano-3,3-diphenylacrylate, ethyl-2-cyano-3-(3',4'-methylenedioxyphenyl)-acrylate, etc., triazine-based ultraviolet absorbers, etc., may be used, and benzotriazole-based ultraviolet absorbers or triazine-based ultraviolet absorbers that have high transparency and are excellent in preventing deterioration of polarizing plates or transmittance variable layers are preferred, and benzotriazole-based ultraviolet absorbers having more appropriate spectral absorption spectra are particularly preferred. The benzotriazole-based ultraviolet absorbers may be bis-based, and may be, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), etc.

The hard coating layer is not particularly limited as long as it is for protecting a member such as a polarizing plate, a variable transmittance layer, etc. from external physical or chemical impacts, and a hard coating layer that has been developed in the past and will be developed later may be used.

In one embodiment, the hard coating layer may be formed by applying a hard coating layer forming composition on another member and then curing it with light or heat. The hard coating layer forming composition is not particularly limited, and may include, for example, a photocurable compound and a photoinitiator.

The photocurable compound and photoinitiator may be used without limitation as those commonly used in the art, the photocurable compound may be, for example, a photopolymerizable monomer, a photopolymerizable oligomer, etc., and examples of the photocurable compound may include monofunctional and/or polyfunctional (meth)acrylates, and examples of the photoinitiator may include hydroxycyclohexyl phenyl ketone, trimethylbenzoyl diphenylphosphine oxide, an acetophenone-based photoinitiator, an oxime ester-based photoinitiator, etc., and the photoinitiator may include Irgacure-184, TPO, Irgacure-907, etc. as commercially available products.

### <Smart Window, Automobile and Building Window>

The present disclosure includes a smart window including the light control laminate in addition to the light control laminate. The light control laminate of the present disclosure is applied to the smart window so that it may be easy to handle in the process, thereby preventing damage and defects.

In addition, the present disclosure includes an automobile in which the smart window is applied to at least one of a front window, a rear window, a side window, a sunroof window, and an internal partition, and a building window including the smart window.

Hereinafter, embodiments of the present disclosure will be specifically described. However, the present disclosure is not limited to the embodiments disclosed below, but can be implemented in various different forms, and these embodiments are provided only to make the disclosure of the present disclosure complete and to fully inform those skilled in the art to which the present disclosure pertains of the scope of the invention, and the present disclosure is defined only by the scope of the claims.

### Preparation Example 1: Preparing Polarizing Plate

### (1) Swelling Treatment Process

A polyvinyl alcohol film (fabric film) having a thickness of 60 µm (manufactured by Kuraray Co., Ltd., trade name "Kuraray Poval Film VF-PE#6000", average degree of polymerization 2400, degree of saponification 99.9 mol%) was returned while it was being continuously unwound from a fabric roll, and immersed in a swelling bath containing pure water at 20°C for 30 seconds. In this swelling treatment process, a difference in peripheral speed was applied between the nip rolls to perform stretching between rolls (longitudinal uniaxial stretching). The stretch ratio based on the fabric film was set to 2.5 times.

### (2) Dyeing treatment process

Subsequently, the film that passed through the nip rolls was immersed in a dyeing bath at 30°C having a mass ratio of pure water/potassium iodide/iodine/boric acid of 100/2/0.01/0.3 for 120 seconds. In this dyeing treatment, a difference in the peripheral speed was applied between the nip rolls to perform stretching between rolls (longitudinal uniaxial stretching). The stretch ratio based on the film after the swelling treatment process was set to 1.1 times.

### (3) Crosslinking treatment process

Subsequently, the film that passed through the nip rolls was immersed in a first crosslinking bath at 56°C having a mass ratio of pure water/potassium iodide/boric acid of 100/12/4 for 70 seconds. A difference in the peripheral speed was applied between the nip roll and the nip roll provided between the first crosslinking bath and the second crosslinking bath to perform stretching between rolls (longitudinal uniaxial stretching). The stretch ratio based on the film after the dyeing treatment process was set to 1.9 times.

### (4) Color complementing treatment process

Subsequently, the film after the crosslinking treatment was immersed in a second crosslinking bath at 40°C having a mass ratio of potassium iodide/boric acid/pure water of 9/2.9/100 for 10 seconds.

### (5) Cleaning treatment process

Subsequently, the film after the second crosslinking treatment was immersed in a cleaning bath containing pure water at 14°C for 5 seconds, and cleaned at a shower volume of 5 m³/h and a shower temperature of 14°C.

### (6) Drying treatment process

Subsequently, the film after the cleaning treatment process was passed through a drying furnace, and heated and dried at 80°C for 190 seconds to manufacture a polarizer film. The moisture ratio after drying was 13.6%, and the thickness of the obtained polarizer film was approximately 18 µm.

### (7) Bonding treatment process

Subsequently, as an adhesive, an aqueous adhesive containing 5 parts by mass of polyvinyl alcohol with respect to 100 parts by mass of water was prepared. Thereafter, a protective film was laminated on both surfaces of the polarizer film using the prepared UV adhesive. UV light exposure was performed on the obtained laminate, and the adhesive was cured to prepare a first polarizing plate and a second polarizing plate, respectively.

### (8) Surface treatment process

Each of the prepared first and second polarizing plates was subjected to corona and plasma treatment for 30 seconds at a discharge voltage of 0.5 kW using Direct Plasma (manufacturer: APP), so that the surface roughness of each polarizing plate was 0.5 to 1.0 µm.

### Preparation Example 2: Preparing Liquid Crystal Layer-forming Composition

2 g of TN liquid crystal (manufacturer: Silichem Co., Ltd., model name: WH-S811) and 0.5 g of HDI isocyanurate trimer (manufacturer: Vencorex Tolonate, model name: HDT-LV2), a trifunctional isocyanate-based monomer, were mixed and stirred for 30 minutes to prepare a liquid crystal layer-forming composition.

### Examples 1-1 to 1-9 and Comparative Examples 1-1 to 1-5: Preparing Electrode Layer

The first polarizing plate and the second polarizing plate were coated with PEDOT·PSS (manufacturer: Daeha Mantech Co., Ltd., model number: TEA-150) to have a certain thickness using a 1-inch wire bar coater (manufacturer: Kipae E&T Co., Ltd., model number: #24), and dried at 80°C for 5 minutes to form a first electrode layer and a second electrode layer, respectively, to the thicknesses described in Table 1. The first and second polarizing plates on which the first electrode layer and the second electrode layer were formed were fixed to a vacuum plate set up in a rubbing machine respectively so as not to move in order to rub in the same direction as the polarizer absorption axis, and physical orientation was performed using a rubbing cloth (material: rayon) under the conditions of a speed of 10 mm/s, a depth of 0.3 mm, an RPM of 1000 times/min, and a count of 2 times.

### Examples 2-1 to 2-9 and Comparative Examples 2-1 to 2-5: Manufacturing Light Control Laminate

The first electrode layer on the first polarizing plates prepared in Preparation Example 1, Examples 1-1 to 1-9 and Comparative Examples 1-1 to 1-5 was coated with the liquid crystal layer-forming composition of Preparation Example 2 using a 3/4-inch wire bar coater (manufacturer: Kipae E&T Co., Ltd., model number: #4) to have a cell gap of 5 µm.

When the coating was completed, the absorption axes of the second polarizing plates in which the second electrode layers prepared in Examples 1-1 to 1-9 and Comparative Examples 1-1 to 1-5 were formed were rotated to form 90° to the absorption axes of the first polarizing plates, and the rubbing-aligned surface of the second electrode layer was bonded so that it was in contact with the liquid crystal layer.

The bonding-completed cells were treated in an autoclave at 60°C and 6 bar for 30 minutes to uniformly implement a cell gap of 5 µm, thereby manufacturing light control laminates.

### Experimental Example: Evaluation of physical properties

### (1) Adhesive force measurement

When the light control laminate specimens manufactured in Examples 2-1 to 2-9 and Comparative Examples 2-1 to 2-5 using a scratch tester (Nano-scratch Tester; Anton-Paar, NST3) were attached to a measuring stud with an instant adhesive, and then scratched with a load of 0 to 20 mN through a Rockwell indenter with a radius of 2 µm, the minimum forces (mN) required to peel off each of the first and second electrode layers were measured, and the results are shown in Table 1 below.

### (2) Surface resistance measurement

For the light control laminates manufactured in Examples 2-1 to 2-9 and Comparative Examples 2-1 to 2-5, the surface resistances of the first and second electrode layers were measured using a surface resistance meter (MCP-T370), and the results are shown in Table 1 below.

**[Table 1]**

| Classification | Electrode layer | Thickness of each of first and second electrode layers (nm) | Adhesive force (mN) | | Surface resistance (Ω/□) | |
|---|---|---|---|---|---|---|
| | | | First electrode layer | Second electrode layer | First electrode layer | Second electrode layer |
| Example 2-1 | Example 1-1 | 252 | 3.23 | 3.33 | 131 | 134 |
| Example 2-2 | Example 1-2 | 263 | 3.68 | 3.75 | 134 | 135 |
| Example 2-3 | Example 1-3 | 271 | 3.97 | 4.01 | 138 | 140 |
| Example 2-4 | Example 1-4 | 290 | 4.34 | 4.44 | 142 | 144 |
| Example 2-5 | Example 1-5 | 301 | 3.83 | 3.77 | 131 | 130 |
| Example 2-6 | Example 1-6 | 303 | 4.44 | 4.52 | 133 | 131 |
| Example 2-7 | Example 1-7 | 308 | 3.33 | 3.41 | 134 | 136 |
| Example 2-8 | Example 1-8 | 320 | 4.42 | 4.63 | 129 | 127 |
| Example 2-9 | Example 1-9 | 330 | 3.13 | 3.38 | 141 | 140 |
| Comparative Example 2-1 | Comparative Example 1-1 | 89 | 1.12 | 0.98 | 121 | 119 |
| Comparative Example 2-2 | Comparative Example 1-2 | 78 | 1.38 | 1.52 | 123 | 121 |
| Comparative Example 2-3 | Comparative Example 1-3 | 77 | 2.24 | 2.31 | 125 | 127 |
| Comparative Example 2-4 | Comparative Example 1-4 | 550 | 5.54 | 5.66 | 181 | 190 |
| Comparative Example 2-5 | Comparative Example 1-5 | 700 | 7.18 | 7.31 | 192 | 201 |

Referring to the experimental results, it could be confirmed that in the case of the light control laminates of Examples in which the first and second electrode layers each have a thickness of 250 to 350 nm, an adhesive force of 3 mN or more, and a surface resistance of 150 Ω/□ or less, the driving stabilities were improved, and the power loss and heat generation occurrence were reduced compared to those of the Comparative Examples.

In contrast, in the case of the light control laminates of Comparative Examples 2-1 to 2-3 in which the first and second electrode layers each have a thickness of less than 250 nm and an adhesive force of less than 3 mN, the electrode layers were separated from the other substrate during cutting for smart window application, resulting in occurrence of the smart window driving instability.

In addition, in the case of the light control laminates of Comparative Examples 2-4 and 2-5 in which the first and second electrode layers each have a thickness of more than 350 nm and a surface resistance of more than 150 Ω/□, there was a problem in that power loss and heat generation occurred due to an increase in surface resistance.

## Claims

1. An electrode layer for a smart window, which has a thickness of 250 to 350 nm, an adhesive force of 3 mN or more, and a surface resistance of 150 Ω/□ or less.

2. The electrode layer for a smart window of claim 1, which is formed of an electrode layer-forming composition comprising a conductive polymer.

3. The electrode layer for a smart window of claim 2, wherein the conductive polymer includes one or more selected from the group consisting of polythiophene, poly(3,4-ethylenedioxythiophene), polyaniline, polyacetylene, polydiacetylene, polyphenylene, polyphenylenevinylene, polyphenylene sulfide, poly(thienylene vinylene), poly(thiophene vinylene), polyfluorene, polypyrrole, poly(3,4-ethylenedioxythiophene):polystyrene sulfonate, poly(3,4-ethylenedioxythiophene):camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrene sulfonate, polythiophene: camphorsulfonic acid, polythiophene: toluenesulfonic acid, and polythiophene:dodecylbenzenesulfonic acid.

4. A light control laminate comprising:
a first polarizing plate;
a first electrode layer which is formed on one surface of the first polarizing plate;
a second polarizing plate facing the first polarizing plate;
a second electrode layer which is formed on one surface of the second polarizing plate and faces the first electrode layer; and
a liquid crystal layer which is provided between the first electrode layer and the second electrode layer,
wherein the first electrode layer and the second electrode layer have a thickness of 250 to 350 nm, an adhesive force of 3 mN or more, and a surface resistance of 150 Ω/□ or less.

5. The light control laminate of claim 4, wherein the first electrode layer and the second electrode layer are formed of an electrode layer-forming composition comprising a conductive polymer.

6. The light control laminate of claim 4 or 5, wherein the first electrode layer and the second electrode layer are ones in which a surface in contact with the liquid crystal layer is rubbing-aligned.

7. The light control laminate of one of claims 4 to 6, wherein at least one of the first electrode layer and the second electrode layer is formed in direct contact with one of the first polarizing plate and the second polarizing plate.

8. The light control laminate of one of claims 4 to 7, wherein the liquid crystal layer contains a polymer network and a liquid crystal compound, and the liquid crystal compound is arranged with a uniform initial orientation.

9. The light control laminate of claim 8, wherein the liquid crystal layer contains a cured product of a liquid crystal layer-forming composition including a polymerizable monomer and a liquid crystal compound, and the liquid crystal layer-forming composition comprises 10 to 30% by weight of the polymerizable monomer with respect to the total weight of the composition.

10. The light control laminate of one of claims 4 to 9, wherein the liquid crystal behavior method of the liquid crystal layer is one selected from the group consisting of a twisted nematic (TN) mode, a super twisted nematic (STN) mode, an in-plane switching (IPS) mode, a fringe-field switching (FFS) mode, an electrically controlled birefringence (ECB) mode, and a vertical alignment (VA) mode.
